# EUROPÄISCHE PATENTSCHRIFT

(11) **EP 4 071 391 B1**
(45) Veröffentlichungstag und Bekanntmachung des Hinweises auf die Patenterteilung: **02.10.2024**
(21) Anmeldenummer: 22160398.8
(22) Anmeldetag: 07.03.2022
(51) Int. Cl.: B65D 88/66

(54) **BEHÄLTER UND DOSIERVERFAHREN**
CONTAINER AND METERING METHOD
RÉCIPIENT ET PROCÉDÉ DE DOSAGE

(30) Priorität: 05.03.2021 DE 102021001180
(43) Veröffentlichungstag der Anmeldung: 12.10.2022
(73) Patentinhaber: Volkmann GmbH, 59494 Soest (DE)
(72) Erfinder: SÜMMERMANN, Konrad, 59494 Soest (DE)
(74) Vertreter: Grosse Schumacher Knauer von Hirschhausen

(56) Entgegenhaltungen:
- EP-A1- 3 210 755
- DE-A1- 2 657 636
- DE-U- 1 928 969
- GB-A- 1 358 694
- US-A- 5 145 009

## Beschreibung

### GEBIET DER ERFINDUNG

Die Erfindung betrifft ein Ventil zum Dosieren eines vertikal oder nahezu vertikal verlaufenden Fluid-Flusses.

Das Fluid kann ein Pulver umfassen oder daraus gebildet sein oder ein granulares Material. Derartige Fluide bilden regelmäßig den Rohstoff für die additive Werkstückfertigung, bei der aus einem Pulver oder einem granularen Material durch Energieeintrag mehrdimensionale Strukturen errichtet werden. Derartige Verfahren sind auch unter der Bezeichnung "3D-Druck" bekannt. Bei solchen Fertigungs-Prozessen ist es üblich, dass das Fluid von einem ersten Volumen in ein zweites Volumen überführt wird. Das erste/zweite Volumen kann als Behälter, Behältermodul, Schlauch, Rohr, (externer) Kanal oder als nahezu freies Volumen, etwa oberhalb eines Trichtereinlasses, gebildet respektive entsprechend begrenzt, zumindest jedoch bereichsweise begrenzt, sein. Es kann auch ein Entkopplungs-Mittel vorgesehen sein, welches das erste/zweite Volumen umfasst oder daran angrenzt. Das Fluid soll beispielsweise von einem ersten (Vorrats-)Behälter dosiert oder dosierbar in einen mit dem ersten Behälter fluidtechnisch verbundenen zweiten (Handling-)Behälter gelangen, oder von einem ersten Behältermodul eines erfindungsgemäßen modularen Behälters in ein zweites Behältermodul. Behälter und/oder Behältermodul können einlass- respektive auslassseitig einen Schlauch, ein Rohr oder einen Behälter-Kanal aufweisen. Zwischen den Volumina respektive Behältern/Behältermodulen ist eine Dosierarmatur vorgesehen, insbesondere ein Ventil. Das Ventil kann als Feeding-Element respektive Feeding-Ventil gebildet sein, womit das Fluid direkt in ein angrenzendes Volumen (Beispiel: Saugschlauch) aufgegeben wird. Das Ventil zwischen den Volumina respektive Behältern oder Behältermodulen, worin das Fluid angeordnet ist, umfasst ein Ventilgehäuse mit einer Fluideinlass-Öffnung und einer Fluidauslass-Öffnung. Das Ventilgehäuse kann, sofern eines der Volumina oder beide Volumina durch Behälter/Behältermodul oder anderweitig begrenzt sind, an der Volumenbegrenzung respektive an dem ersten Behälter und/oder an dem zweiten Behälter, oder an dem ersten Behältermodul und dem zweiten Behältermodul, befestigbar sein, etwa mittels Flanschverbindung. Das Ventilgehäuse umfasst einen Gehäuse-Kanal, in oder an dem ein beweglicher Ventilkörper angeordnet ist, sodass der Gehäuse-Kanal in einer geöffneten Ventilkörperstellung für das Fluid durchlässig und in einer geschlossenen Ventilkörperstellung für das Fluid undurchlässig ist. Es ist eine Dichtungsanordnung vorgesehen, mit der der Gehäuse-Kanal in geschlossener Ventilkörperstellung dicht verschlossen ist. Durch das Öffnen/Schließen des Ventils wird das Fluid dosierbar.

Die Erfindung betrifft einen Behälter für ein Fluid nach dem Oberbegriff des Anspruchs 1 sowie ein Dosierverfahren für ein metallpulverartiges Fluid nach dem Oberbegriff des Anspruchs 12.

### TECHNOLOGISCHER HINTERGRUND

Bei dem Fluidhandling sind Verunreinigungen im Fluid stets unerwünscht. Insbesondere bei der additiven Fertigung können Verunreinigungen im fluidartigen Fertigungsrohstoff problematisch sein, da jede Verunreinigung im Rohstoff bei der Werkstückfertigung zumindest eine Fehlstelle oder eine defekte Stelle im oder am Werkstück verursachen kann, sodass das komplette Werkstück mitunter unbrauchbar wird. Derartige Fehlstellen sind kaum oder nicht zu identifizieren/detektieren und können die Ursache bilden für ein mitunter sehr gefährliches Bauteilversagen. Insbesondere in der Luft- und Raumfahrtechnik kann dies verheerende Auswirkungen haben. Ein als fertigungsbedingt unbrauchbar erkanntes Werkstück wäre zumindest neu zu fertigen, was zumindest Zeit und Mehrkosten für die neue Fertigung bedeutet.

Eine Ursache für Verunreinigungen in Fluiden ist zum Beispiel ein Rückstand eines anderen Fluids, etwa nach einem Fluidwechsel in einer Fertigungsvorrichtung, oder Abrieb von insbesondere weichen Materialien im Bereich der Vorrichtungskomponenten oder Armaturen, die mit dem fließenden oder strömenden Fluid in Kontakt geraten. Eine solche Armatur ist beispielsweise ein (Dosier-)Ventil, welches regelmäßig dazu verwendet wird, dass betreffende Fluid zu dosieren bzw. die Fluidströmung zu kontrollieren. Zwar sind die meisten Armaturen überwiegend aus harten und insofern wenig oder keinen Abrieb verursachenden Materialien wie Metall gebildet, es gibt jedoch regelmäßig nichtmetallische Komponenten. Dies sind beispielsweise elastische Dichtungen, auf die in der Armatur nicht verzichtet werden DE2657636A1, DE1928969U, GB1358694A und EP3210755A1 offenbaren bekannte Behälter aus dem Stand der Technik.

### DARSTELLUNG DER ERFINDUNG

Vor diesem Hintergrund besteht die Aufgabe darin, Maßnahmen anzugeben, mit denen Verunreinigungen beim Fluidhandling, insbesondere beim Fluiddosieren, vermieden werden. Diese Aufgabe wird durch ein Ventil zum Dosieren eines Fluid-Flusses nach Anspruch 1 gelöst. Weitere Ausgestaltungen der Erfindung sind Gegenstand der Neben- und/oder Unteransprüche. Der Gehäuse-Kanal des Ventils weist demnach einen Strömungsbereich auf, durch den das Fluid bei geöffneter Ventilkörperstellung strömt. Die Dichtungsanordnung ist außerhalb des Strömungsbereichs angeordnet. Die Befestigung des Gehäuses an den Behältern kann mit einem ersten und einem zweiten Flansch erfolgen. Das Fluid kann ein granulares Material sein, etwa für additive Fertigungsverfahren, oder ein Pulver oder eine (viskose) Flüssigkeit. Das Fluid strömt bei geöffneterVentilkörperstellung durch den Gehäuse-Kanal hindurch und bildet dabei ein Strömungsvolumen respektive einen Strömungskörper. Es ist zweckmäßig, wenn der Ventilkörper sich beim Bewegen von einer geschlossenen Stellung in die geöffnete Stellung in Richtung der Fluidströmung bewegbar ist. Die Ventilkörper-Bewegung erfolgt bei einer Änderung der Ventilkörperstellung vergleichsweise schnell, insbesondere mit schneller Taktung. Bevorzugt erfolgt die Ventilkörperstellungs-Änderung schneller als eine stoß- oder reibungs-bedingte Geometrieänderung des Strömungskörpers bei nicht-geöffneter oder geschlossener Ventilkörperstellung.

Die Form bzw. Geometrie von Strömungsvolumen oder Strömungskörper ist von der Gehäuse-Kanal- respektive Ventilgeometrie abhängig. Hat der Gehäuse-Kanal beispielsweise abschnittsweise runden Querschnitt und im Wesentlichen die Geometrie eines Hohlzylinders, so wird der Strömungskörper abschnitts- oder bereichsweise ebenfalls einen runden Querschnitt aufweisen und beispielsweise eine im Wesentlichen zylindrische Geometrie haben, d. h. eine Strömungssäule. Der Strömungskörper verlässt den Gehäuse-Kanal und somit die Austrittsöffnung, ohne dass dabei Fluidkomponenten mit der Dichtungsanordnung in Kontakt treten. Fluidkomponenten oder Fluidbestandteile können Pulverpartikel, Pulverklumpen, Granulate oder granulare Cluster sein, d. h. diejenigen Partikel, aus denen sich das Fluid zusammensetzt. Sofern das Fluid flüssig ist, kann eine Fluidkomponente ein Flüssigkeitsvolumen, etwa ein Töpfchen oder ein Tropfen, sein. Zwischen Dichtungsanordnung und Strömungsbereich kann ein Abstand vorgesehen sein. Bei einer Radialsymmetrie kann der Abstand zwischen Strömungsbereich und Sitz der Dichtanordnung entlang des radialsymmetrischen Umfangs konstant sein, es kann insofern eine ringförmige Dichtungsanordnung vorgesehen sein und ein Strömungsbereich mit rundem Querschnitt, wobei der Radius des Querschnitts des Strömungsbereichs kleiner ist als der (innere) Radius der ringförmigen Dichtungsanordnung. Die Ventilanordnung ist dabei so beschaffen, dass eine schnelle Taktung der Ventilkörpersteuerung möglich ist, d. h. ein schnelles Öffnen/Schließen und ein häufiges Öffnen/Schließen.

Die Taktung der Ventilkörperstellung ist erfindungsgemäß schneller als eine trägheitsbedingte und durch Ventilkörper und/oder Ventilgehäuse verursachte Richtungs- und/oder Geschwindigkeits-Änderung des Fluid-Flusses. Wird der Ventilkörper beispielsweise aus einer geöffneten oder nahezu geöffneten Stellung in eine nicht-geöffnete, insbesondere geschlossene, Stellung bewegt, benötigt der Strömungskörper eine gewisse Reaktionszeit, in der sich die Geometrie des Strömungskörpers insoweit ändert, als der Strömungskörper stoß- und/oder reibungs-bedingt sein Fließverhalten ändert, insbesondere wird der Fluss des Fluids verzögert, mithin gestoppt. Die dabei wirkende Trägheit des Strömungskörpers bewirkt, dass das Fluid nicht in die Nähe der Dichtungsanordnung gelangt, wodurch die Dichtung taktungsbedingt von abrasiven Einflüssen des Fluids des Strömungskörpers verschont bleibt.

Erfindungsgemäß weist der fluidauslass-seitige Strömungsbereichs-Querschnitt eine kleinere Fläche auf als der Querschnitt der Dichtungsanordnung.

Der Strömungsbereich kann im Wesentlichen zylindergeometrisch geformt sein, wobei die zwischen auslassseitiger Kante des Strömungsbereichs und Dichtungsanordnung ein Versatz (nach außen) gebildet ist, so dass die Dichtungsanordnung den Strömungsbereich nicht tangiert. Erfindungsgemäß weist der Strömungsbereich zumindest eine Verjüngung auf. Der kleinere Strömungsbereichs-Querschnitt der Verjüngung ist im Bereich der Fluidauslass-Öffnung angeordnet. Der kleinere Querschnitt der Verjüngung kann unmittelbar an der Fluidauslass-Öffnung angeordnet sein oder dazu benachbart. Der größere Querschnitt der Verjüngung ist demnach auf derjenigen Gehäuse-Kanalseite angeordnet, auf der auch die Fluideinlass-Öffnung angeordnet ist. Der sich verjüngende Strömungsbereich kann eine Kegelsymmetrie aufweisen. Durch die radialsymmetrische Geometrie und durch die Verjüngung werden die Fluidkomponenten (Granulate, Partikel, Flüssigkeitsvolumina) bei ihrer Strömung durch den Gehäuse-Kanal mit einer in radialer Richtung, nämlich in Richtung der zentralen Symmetrieachse, verlaufenden Strömungs-Richtungskomponente beaufschlagt. Die Fluidbestandteile strömen demnach im Bereich der Verjüngung nicht zur Gehäuse-Kanalaußenseite sondern eher in Richtung mittiger Symmetrieachse, wodurch sie sich in diesem Bereich des Gehäuse-Kanals von der Position der Dichtanordnung wegbewegen. Es kommt also während der Fluidströmung nicht zu einem Kontakt zwischen den Fluidbestandteilen und der Dichtanordnung. Möglicherweise beim Öffnen des geschlossenen Ventilkörpers kann es zu einem Kontakt zwischen Fluid und Dichtanordnung kommen. Hierbei wirken jedoch keine oder kaum abrasive Kräfte auf die Dichtanordnung da das Fluid im Moment des Öffnens eine geringe Fließgeschwindigkeit hat.

Der Strömungskörper kann einen Durchmesser im Bereich von ca. 30 mm bis ca. 200 mm aufweisen, insbesondere im Bereich von ca. 65 mm bis ca. 85 mm, beispielsweise ca. 75 mm. Der Durchmesser der Ventilkörperführung kann in einem vergleichbaren Größenbereich liegen. Indem die Ventilkörperführung oberhalb des Ventilköpers angeordnet ist, wird der bewegbare Ventilkörper von der Last (Gewichtskraft) des Fluids zumindest teilweise abgeschirmt. Indem auf dem Gehäuse und dem Ventilkörper somit eine begrenzte und durch die Geometrie des Ventils definierbare Körper-Last durch das Fluid gegeben ist, kann der Ventilkörper vergleichsweise klein dimensioniert werden, sodass eine Ventilkörperstellungs-Änderung schnell und insofern auch schnell getaktet erfolgen kann. Die Körper-Last ist deutlich geringer als die auf die Ventilköperführung wirkende Last des Fluids.

Der Strömungsbereich kann bevorzugt stufen- und/oder kantenlos gebildet sein. Dadurch werden Verunreinigungen im Inneren des Ventils vermieden, was insbesondere bei einem Fluidwechsel relevant wird. Ein Fluidwechsel findet immer dann statt, wenn die Vorrichtung, durch die das Fluid strömt, zunächst mit einem ersten Fluid, etwa für ein erstes Werkstück, betrieben werden soll und anschließend mit einem zweiten, sich von dem ersten Fluid materialtechnisch, insbesondere physikalisch und/oder chemisch, unterscheidenden zweiten Fluid, etwa für ein zweites Werkstück. Das zweite Fluid kann sich, insbesondere bei Anwendungen im Bereich der additiven Fertigung, von dem ersten Fluid auch durch die pulvrigen respektive granularen Eigenschaften unterscheiden, etwa durch die Körnung, Korngrößen, Partikelgrößen und/oder Partikelgrößenverteilung. Etwaige Rückstände des ersten Fluids bilden beim Betrieb mit dem zweiten Fluid eine Verunreinigung. Indem das Ventilinnere, insbesondere der Strömungsbereich, keine Stufen oder Kanten umfasst können sich dort keine Fluidreste absetzen und Verunreinigungen, etwa durch einen Fluidwechsel, unterbleiben.

Das Vermeiden von Verunreinigungen beim Fluidhandling, insbesondere beim Fluiddosieren, gelingt ferner mit einem (Dosier-)Ventil.

Der Gehäuse-Kanal umfasst demnach zumindest ein, insbesondere die Strömungsrichtung des Fluids beeinflussendes, Führungselement, mit welchem das Fluid in geöffneter Ventilkörperstellung so durch den Gehäuse-Kanal hindurchführbar ist, dass das Fluid an der Dichtungsanordnung vorbeigeführt wird ohne mit der Dichtungsanordnung in Kontakt zu treten. Mit dem Führungselement werden die Fluidkomponenten mit einer Strömungs-(Richtungs-)Komponente beaufschlagt, die von der durch den Gehäuse-Kanal ansonsten vorgegebenen Richtung bereichsweise abweicht. Sowohl bei dieser Ventil-Variante als auch bei der oben beschriebenen Ventil-Variante wird mit technischen Mitteln erreicht, dass sich die Dichtung nicht im Materialfluss des durch das Ventil hindurchströmenden Fluids befindet. Dies wiederum bewirkt, dass an dem Material der Dichtungsanordnung beim Materialfluss kein, insbesondere abrasiver, Verschleiß gebildet wird. Das Material der Dichtung wird durch das strömende Fluid nicht berührt und insofern nicht verschlissen. Die Dichtungsanordnung muss demnach mit deutlich geringerem Aufwand oder mit nahezu keinem Aufwand gewartet werden. Lediglich im Moment des Öffnens/Schließen des Ventils kann es zum Kontakt zwischen Dichtungsanordnung und Fluid kommen, wobei hierbei jedoch nicht von einem schleifenden oder reibenden, d. h. abrasiven, Kontakt auszugehen ist. Dieser Vorteil macht sich insbesondere dann spürbar bemerkbar, wenn das Fluid aus einem Material für additive Fertigungsverfahren gebildet ist. Es ist gänzlich unerwünscht, dass sich etwaige Dichtungsrückstände unter das Fluid mischen, weil beim additiven Fertigen in das Werkstück Fehlstellen oder Defekte immer dann eingearbeitet werden, wenn das Fluid mit Dichtungsrückständen verunreinigt ist. Insofern können additive Fertigungsverfahren mit der hierin beschriebenen Ventilanordnung sehr präzise und mit sehr hoher Qualität durchgeführt werden, u. A. da das Fertigungsfluid ohne Dichtungsrückstände bereitgestellt wird.

Gemäß einer bevorzugten Ausgestaltung können Gehäuse-Kanal und Führungselement eine stufen- und/oder kantenlose, die Gehäuse-Kanalinnenfläche bildende Oberfläche bilden, so dass Anhaftungen des Fluids insbesondere im Bereich des Führungselementes unterbleiben. Gehäuse-Kanalwand und Führungsmittel können einstückig oder mehrteilig gebildet sein.

Es kann auch vorgesehen sein, dass das Führungsmittel in den Gehäuse-Kanal einsetzbar, insbesondere nachträglich einsetzbar, ist. Insofern kann das (einsetzbare) Führungsmittel nachrüstbar sein für solche Ventil-Armaturen, bei denen ein Führungsmittel herstellerseitig zunächst nicht vorgesehen ist.

Das Vermeiden von Verunreinigungen beim Fluidhandling, insbesondere beim Fluiddosieren, gelingt ferner mit einem (Dosier-)Ventil. Demnach ist der Ventilkörper in einer Ventilkörperführung beweglich angeordnet, wobei die Ventilkörperführung mit einem, insbesondere gasförmigen, Spülmedium beaufschlagbar ist, so dass innerhalb der Ventilkörperführung ein Überdruck gegenüber der Ventilkörperumgebung herrscht. Als Spül-Gas kann beispielsweise ein Inertgas verwendet werden, d. h. ein wenig oder nicht reaktives Gasmedium. Mit der Spülfunktion des Ventils werden Fluidreste entfernt und in der Führung des Ventilkörpers bleiben keine Fluidreste und somit keine Quellen für Verunreinigungen zurück. Das Spülmedium wird über einen oder mehrere Spülmedium-Anschlüsse in das Ventilgehäuse eingebracht.

Das Vermeiden von Verunreinigungen beim Fluidhandling, insbesondere beim Fluiddosieren, gelingt ferner mit einem Ventil. Erfindungsgemäß ist der Ventilkörper in einer Ventilkörperführung beweglich angeordnet, wobei die Fläche der Projektion der Ventilkörperführung auf die Ebene der Fluidauslass-Öffnung kleiner ist als die Fläche der Projektion des Ventilkörpers auf die Ebene der Fluidauslass-Öffnung. Die Ventilkörperführung ist demnach so konzipiert, dass die Projektion der Ventilkörperführung auf den Bereich der Auslassöffnung flächenmäßig größer ist als die entsprechende Projektionsfläche des Ventilkörpers. So wird erreicht, dass die (dynamischen und/oder statischen) Kräfte der Produktsäule des metallpulvrigen

Fluids überwiegend auf die Gehäusekomponenten, weniger jedoch auf den Ventilkörper einwirken. Dies führt zu einer Optimierung der Fließeigenschaften des Fluids und es kann ein Effekt der Selbsthemmung entstehen, was die Kraftverteilung begünstigt, und was insbesondere den Ventilköper entlastet. Durch die Entlastung des Ventilkörpers wird auch die Dichtung entlastet und es werden Verunreinigungen, etwa durch Fluidreste, im Bereich der Dichtung vermieden. Das Ändern der Ventilkörperstellung wird dadurch erleichtert und es wird möglich, den Ventilkörper mit geringem Kraftaufwand schnell getaktet zu öffnen/schließen.

Der Ventilköper kann pneumatisch und/oder elektrisch und/oder mechanisch, insbesondere manuell, und/oder mittels energie-wandelndem Mittel, bewegbar sein. Der jeweilige Antrieb zum Bewegen des Ventilkörpers kann innerhalb des Gehäuses angeordnet sein oder, zumindest abschnittsweise, außerhalb. Für die, insbesondere pneumatische, Ventilkörper-Ansteuerung kann eine Steuereinrichtung vorgesehen sein, an der gemäß einer weiteren Ausgestaltung ein oder mehrere mit der Steuerung schalttechnisch verbundene Sensormittel vorgesehen sind, die die Ventilposition erfassen. Der Ventilkörper kann bevorzugt mittels einer von außerhalb des Ventils zugänglicher Aktorik bewegbar sein, wobei die Aktorik über eine Durchführung mit dem Ventilkörper mechanisch verbunden ist. Die Durchführung kann mit einem, insbesondere gasförmigen Spülmedium beaufschlagbar sein, so dass in der Durchführung ein Überdruck gegenüber der Umgebung der Aktorik und/oder der Durchführung herrscht. Die Aktorik kann eine Exzenterlagerung umfassen, beispielsweise mit zumindest einem festen Anschlag. Das Spülmedium kann über zumindest einen eigenen, für die Aktorik vorgesehenen Anschluss zugeführt werden oder über einen Bypass einer bereits vorhandenen Spülmittelzuführung.

Bei den oben beschriebenen Ventil-Varianten kann vorgesehen sein, dass die Dichtungsanordnung radialsymmetrisch gebildet ist, insbesondere umfassend zumindest einen O-Ring oder aus zumindest einem O-Ring gebildet. Die Dichtanordnung kann mehrere O-Ringe umfassen und/oder eine oder mehrere Dichtungen mit einem beliebigen, insbesondere nicht-(kreis-)runden, Querschnitt. Die Ringe und/oder Dichtungen können aus einem elastischen Kunstsoff gebildet sein oder zumindest einen elastischen Kunststoff umfassen.

Das Ventil kann einen radialsymmetrischen Ventilkörper umfassen und/oder einen radialsymmetrischen Gehäuse-Kanal, insbesondere einen zumindest abschnittsweise kegelsymmetrischen Ventilkörper und/oder einen kegelsymmetrischen Strömungsbereich und/oder ein kegelsymmetrisches Führungselement. Der Ventilkörper kann, zumindest abschnittsweise, sphärisch oder kugelsymmetrisch gebildet sein, oder zumindest abschnittsweise zumindest eine gewölbte Fläche aufweisen. Die Kegelsymmetrie gestattet es, dass das Fluid nicht nur eine Strömungskomponente in gehäuse-kanalsymmetrischer Richtung aufweist, sondern auch eine radial gerichtete Strömungskomponente, wobei der Materialfluss idealerweise gleichmäßig über den Kegelumfang verteilt ist.

Die Dichtungsanordnung kann in einer im oder am Gehäuse-Kanal angeordneten Ausnehmung oder Aussparung angeordnet sein. Eine Begrenzung der Ausnehmung respektive Aussparung kann zumindest abschnittsweise den Strömungsbereich begrenzen. Sofern die Dichtungsanordnung einen runden oder nahezu runden Dichtungsquerschnitt aufweist, kann die Ausnehmung einen dazu passenden, d. h. ebenfalls runden oder nahezu runden Ausnehmungsquerschnitt aufweisen. Eine Begrenzung der Ausnehmung bildet einen Rücksprung bezogen auf den Sitz der Dichtung oder eine (Abriss-)Kante des Strömungsbereichs, wobei die Dichtung in der Ausnehmung so angeordnet ist, dass zwischen der Abrisskante und der Dichtung ein Zwischenraum oder Spalt verbleibt. Der Zwischenraum oder Spalt bewirkt, dass der Strömungskörper des Fluids beim Strömen durch den Strömungsbereich an der Dichtanordnung vorbeiströmt, ohne dass Dichtung und Fluid miteinander Kontakt haben.

Der Ventilkörper kann gemäß einer Ausgestaltung einen Ventilkörper-Schaft umfassen, an dem zumindest ein Abstreifelement zum Abstreifen von Fluidresten während der Ventilkörperbewegung vorgesehen ist.

Ein Verdichten des Fluids respektive der Materialsäule innerhalb der Ventil-Armatur wird dadurch vermieden, dass der Ventilkörper beim Bewegen von der geschlossenen Stellung in die geöffnete Stellung in Richtung der Fluidströmung (bei geöffneter Ventilkörperstellung) bewegbar ist. Auch bei dieser Ventil-Ausgestaltung wird eine Verunreinigung des Fluids vermieden, nämlich eine Verunreinigung infolge einer ventilinternen Materialverdichtung und damit einhergehendem unerwünschtem Materialeintrag in Hohlräume innerhalb des Ventils.

Das Vermeiden von Verunreinigungen beim Fluidhandling, insbesondere beim Fluiddosieren, gelingt ferner mit einem Behälter nach Anspruch 14. Bei dem erfindungsgemäßen Behälter ist ein hierin beschriebenes (Dosier-)Ventil vorgesehen. Erfindungsgemäß ist der Behälter modular gebildet, wobei ein erstes Modul kann an einem ersten Ventil-Flansch angeordnet sein und ein zweites Modul an einem zweiten Ventil-Flansch.

Das Vermeiden von Verunreinigungen beim Fluidhandling, insbesondere beim Fluiddosieren, gelingt ferner mit einem Dosierverfahren nach Anspruch 12. Das Dosierverfahren dient dem Dosieren einer Fluid-Strömung eines Fluids von einem ersten Volumen in ein zweites Volumen, insbesondere von einem ersten Behälter in einen mit dem ersten Behälter fluidtechnisch verbundenen zweiten Behälter, oder (erfindungsgemäß) von einem ersten Behältermodul eines modularen Behälters in ein zweites Behältermodul. Die Volumina können, zumindest abschnittweise, durch einen Schlauch oder durch ein Rohr oder durch einen (externen) Kanal begrenzt sein. Behälter oder Behältermodul können, insbesondere einlass- und/oder auslassseitig einen Schlauch, ein Rohr oder einen Kanal umfassen. Es kann vorgesehen sein, dass zumindest eines der Volumina zumindest bereichsweise als freies Volumen gebildet ist, etwa angrenzend an einen Trichtereinlass. Bei dem Verfahren kann ein hierin beschriebener Behälter vorgesehen sein. Bei dem Dosierverfahren wird ein hierin beschriebenes (Dosier-)Ventil verwendet. Indem das Dosierverfahren das hierin beschriebene Ventil verwendet, gelingt ein Fluid-Dosieren (oder -Feeden), ohne dass (nennenswerte) Verunreinigungen entstehen. Insofern bewirkt das Dosierverfahren eine Verbesserung der Fluidqualität bei der anschließenden Fluidverarbeitung. Dies stellt besonders beim additiven Fertigen (3D-Druck) erhebliche Vorteile bereit.

Es kann eine Taktung beim Dosierverfahren vorgesehen sein, d. h. das Ventil öffnet/schließt/öffnet/schließt/.../... gemäß einem vorgegebenen oder vorgebbaren Takt. Insofern kann eine, insbesondere schnelle, Taktung von abwechselnd erster, insbesondere geschlossener, Ventilkörperstellung und zweiter, insbesondere geöffneter oder teilweise geöffneter, Ventilkörperstellung vorgesehen sein. Erfindungsgemäß, umfasst die Taktung bis zu 20 Ventilkörperstellungs-Änderungen pro Sekunde. Bei der (schnellen) Taktung kann auch vorgesehen sein, dass das Ventil nicht vollständig schließt und/oder nicht vollständig öffnet. Bei der Taktung können unterschiedliche Intervallzeiten vorgesehen sein, so dass durch die Taktung ein Fluidstrom justierbar wird hinsichtlich der Parameter Fluidvolumen oder Fluidgewicht pro Zeiteinheit, etwa pro Sekunde (angegeben in den SI-Einheiten l/s, kg/s, etc.). Die Taktzeiten können beispielsweise ein Bruchteil einer Sekunde betragen, d. h. das Ventil ändert seine getaktete Ventilkörperstellung mehrmals pro Sekunde. Es kann insofern eine Öffnungs- oder Schließzeit vorgesehen sein, die unterhalb von einer Sekunde liegt. Die Öffnungs- oder Schließzeit kann etwa eine Zehntel-Sekunde betragen oder einige Zehntel-Sekunden. Das Dosieren kann beispielsweise so erfolgen, dass das Ventil zunächst für eine bestimmte Zeitspanne (mehrere Sekunden, Minuten) vollständig geöffnet wird. Sobald ein bestimmter Fluidstrom oder eine Fluidmenge das Ventil verlassen hat, kann eine Feindosierung erfolgen, indem die Ventilkörperstellung getaktet verändert wird. Dabei kann zunächst ein langsamer Takt vorgegeben werden, der schrittweise oder bedarfsweise erhöht wird, solange, bis ein gewünschter Fluss erreicht ist oder eine gewünschte Menge. Anschließend kann das Ventil wieder vollständig geschlossen werden.

Die verunreinigungs-verhindernden Maßnahmen des Ventils respektive des Dosierverfahrens resultieren dabei nicht in einer Taktzeitreduzierung, sondern es gelingt vielmehr, das Verfahren respektive das Ventil mit sehr schneller Taktung zu betreiben. Die Ventilgeometrie leistet hierzu einen vorteilhaften Beitrag: Indem die Fläche der Projektion der Ventilkörperführung auf die Ebene der Auslassöffnung kleiner ist als die Fläche der Projektion des Ventilkörpers (Kegel) auf dieselbe Ebene, lastet das Gewicht der Fluidsäule im Wesentlichen auf dem Ventilgehäuse und der damit verbundenen Ventilkörperführung. Damit einher geht eine Entlastung des Ventilkörpers, wodurch es ermöglicht wird, dass das Bewegen des Ventilkörpers sehr schnell getaktet werden kann. Es kann in sehr kurzer Zeit ein (teilweises oder vollständiges) Öffnen/Schließen des Ventilkörpers erfolgen, die Ventilkörperstellung kann pro Zeiteinheit (pro Sekunde beispielsweise) sehr oft verändert werden (hoher Takt).

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel eines Ventils dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen
- Fig. 1A: ein Ventil in seitlicher schematischer Schnitt-Ansicht (geschlossen),
- Fig. 1B: das Ventil gemäß Fig. 1A in einer (anderen) seitlichen Schnittansicht (geöffnet) und
- Fig. 2: das Ventil gemäß Fig. 1A/B in schematischer Aufsicht.

### DETAILLIERTE BESCHREIBUNG VON AUSFÜHRUNGSBEISPIELEN

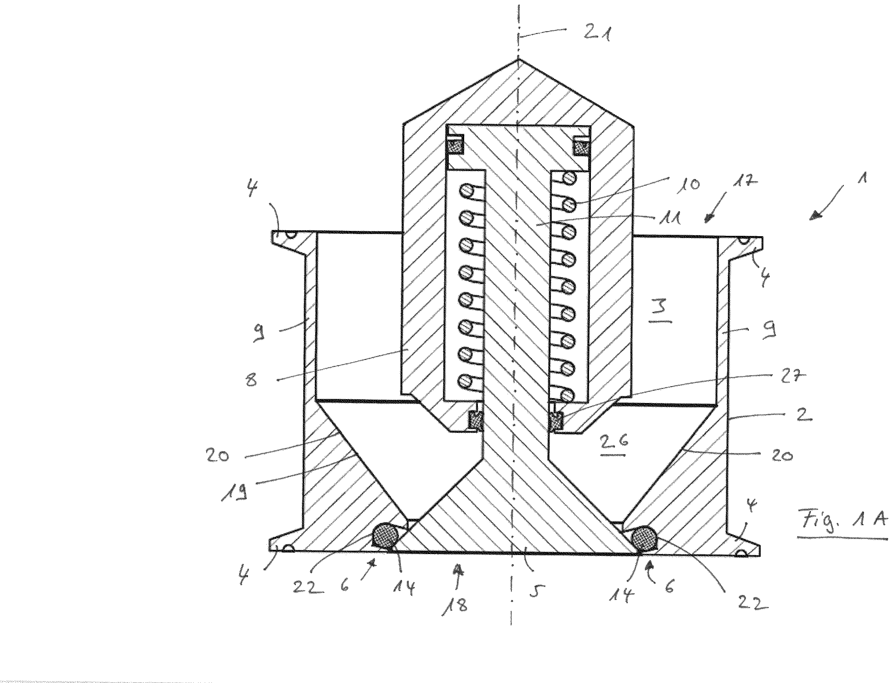

Eine seitliche schematische Ansicht eines vertikalen Schnitts durch ein Ventil 1 kann der Fig. 1A entnommen werden. Das Ventil 1 umfasst ein Ventilgehäuse 2, in dem ein Gehäuse-Kanal 3 angeordnet ist. An dem Ventilgehäuse 2 ist endseitig jeweils ein Flansch 4 angeordnet, womit das Ventil 1 einlassseitig und auslassseitig an einem Behälter oder Behältermodul befestigbar ist. In dem Gehäuse-Kanal 3 ist ein auf- und abwärts bewegbarer Ventilkörper 5 angeordnet. Der Ventilköper 5 ist gemäß

Fig. 1A in geschlossener Ventilkörperstellung dargestellt. Indem der Ventilkörper 5 an der Dichtungsanordnung 6 des Ventils 1 anliegt, kann ein Fluid nicht durch den Gehäuse-Kanal 3 des Ventils 1 gemäß Fig. 1A hindurchströmen und das Ventil 1 ist insofern geschlossen.

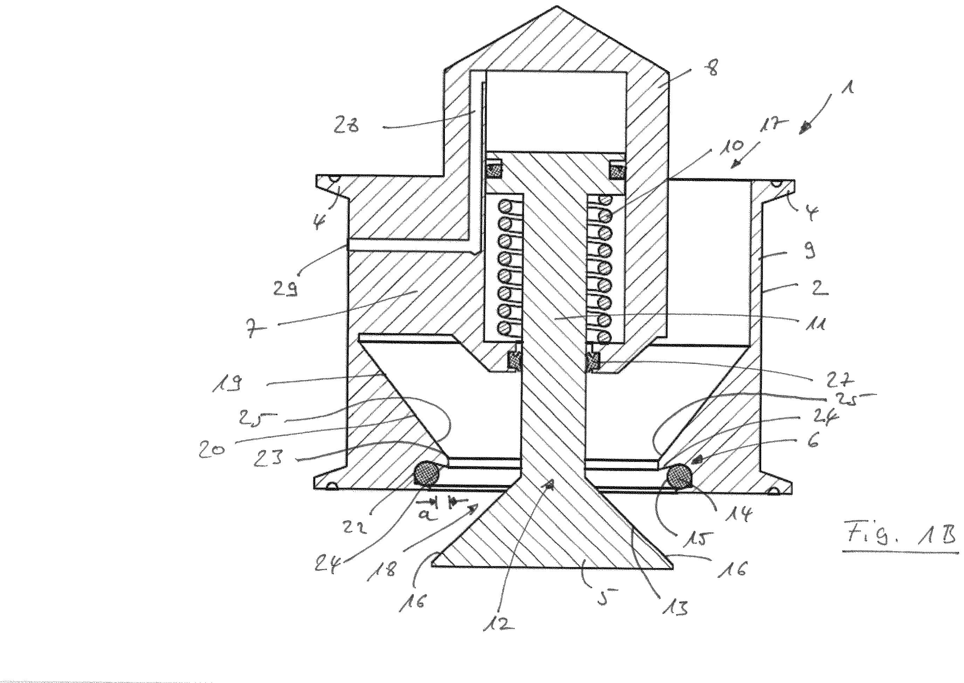

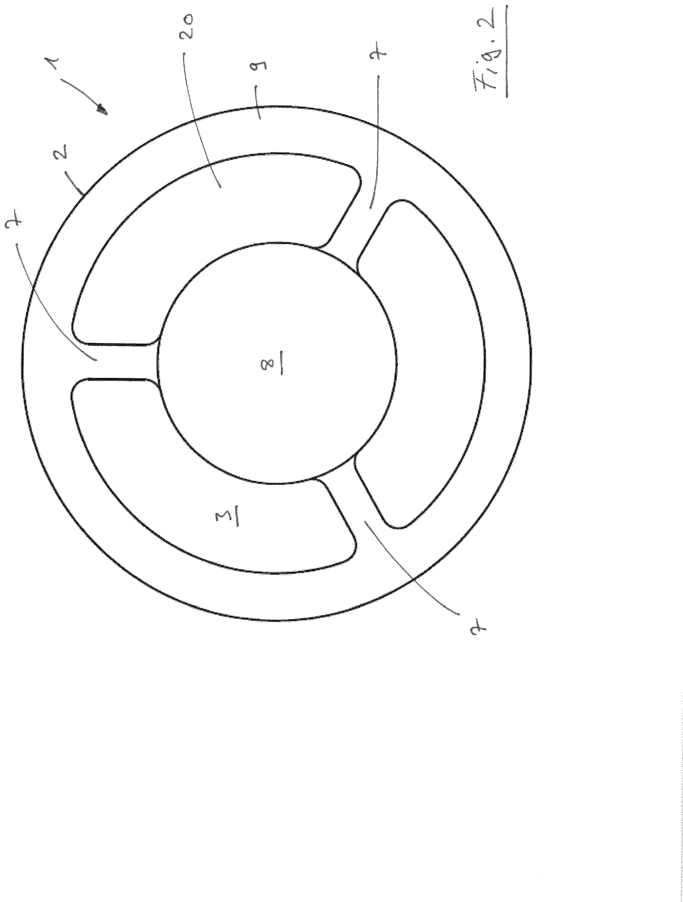

Die Fig. 1B zeigt eine Schnittansicht des Ventils 1 gemäß Fig. 1A, wobei sich der Ventilkörper 5 in geöffneter Ventilkörperstellung befindet. Die Schnittebene gemäß Fig. 1B weicht von der gemäß Fig. 1A insofern ab, als der Schnitt gemäß Fig. 1B durch den Steg 7 verläuft, an dem die Ventilkörperführung 8 mit der hohlzylinderartigen Ventilgehäuse-Wand 9 befestigt ist. In der Aufsicht gemäß der schematischen Darstellung der Fig. 2 ist zu sehen, dass drei Stege 7 vorgesehen sind, die in einem Winkel von jeweils etwa 120° zueinander angeordnet sind. Gemäß in den Figuren nicht dargestellten Varianten können mehr oder weniger Stege 7 zum Halten der Ventilkörperführung 8 vorgesehen sein.

Der Ventilköper 5 ist in der Ventilkörperführung 8 linearbeweglich gelagert. Der Ventilkörper 5 ist mit einer Federkraft beaufschlagt, wobei die Feder 10 beim Öffnen des Ventils 1 gestaucht oder gestreckt wird. Die Konfiguration der Vorspannung der Feder 10 kann so gewählt sein, dass die Federkraft entweder beim Öffnen oder beim Schließen überwunden werden muss.

Der Ventilköper 5 umfasst einen Ventilkörper-Schaft 11 und einen verbreiterten Endbereich 12, der eine kegelförmige Geometrie aufweist. Die Kegelfläche 13 des Ventilkörpers 5 wird beim Schließen gegen eine O-förmige Dichtung 14 der Dichtanordnung 6 gedrückt. Die Dichtung 14 ist aus einem weichen Material gebildet, so dass in geschlossener Stellung (Fig. 1A) eine gute Dichtwirkung erzielbar ist. Scherkräfte werden beim Schließen/Öffnen des Ventils 1 im Bereich der dichtenden Fläche 15 der Dichtung 14 nicht oder kaum erzeugt, da die Schrägfläche 16 des Ventilkörpers 5 in nahezu radialer Richtung auf den Dichtungsquerschnitt gedrückt wird und nicht oder kaum an dem Dichtungsmaterial entlanggeschoben wird. Durch das Fehlen von Scherkräften im Bereich der dichtenden Fläche 15 wird das Dichtungsmaterial weniger beansprucht und es kommt zu keiner Verletzung der dichtenden Oberfläche der Dichtung 14, insbesondere nicht zum Materialabtrag in diesem Bereich. Auch hierdurch werden Verunreinigungen im Fluidstrom vermieden.

In geöffneter Stellung (Fig. 1B) kann ein Fluid durch die Fluideinlass-Öffnung 17 in den Gehäuse-Kanal 3 des Ventils 1 hineinströmen, durch den Gehäuse-Kanal 3 hindurchströmen und durch die Fluidauslass-Öffnung 18 aus dem Gehäuse-Kanal 3 wieder herausströmen. Insbesondere bei pulvrigen oder granularen Fluiden bewirkt das Fluid abrasive Kräfte überall dort, wo es mit Ventilkomponenten in Kontakt tritt. Indem die Gehäuse-Wand 9, die Stege 7, die Ventilkörperführung 8, und der Ventilkörper 5 aus einem metallischen Werkstoff gebildet sind, können die abrasiven Kräfte des strömenden Fluids dort kaum etwas bewirken, so dass sich dort keine, insbesondere keine quantitativ respektive funktionell relevanten, Verunreinigungen durch Abrasion bilden werden. Weder die metallische Wand 9, noch der metallische Steg 7 oder der metallische Ventilkörper 5 samt metallischer Ventilköperführung 8 werden durch das strömende und infolge der Strömung schleifende oder reibende Fluid an den jeweiligen Oberflächen verändert, so dass durch Kontakt mit diesen Flächen keine Verunreinigungen in das Fluid gelangen könnten.

Kritischer im Hinblick auf oberflächliche Materialveränderungen ist das Material der Dichtung 14, welches weich (elastisch) ist, meist aus Kunststoff, und daher anfällig für Abrasionen. Eine Abrasion des Materials der Dichtung 14 wird bei dem Ventil 1 gemäß der Figuren 1A/B und 2 dadurch vermieden, dass das Fluid mit einer Strömungsrichtung beaufschlagt wird, die das Fluid an der Dichtung 14 vorbeiführt. Dies gelingt, indem der Gehäuse-Kanal 3 im Bereich der Fluidauslass-Öffnung 18 eine Verjüngung 19 aufweist. Die Schrägfläche 20 der kegelsymmetrischen Verjüngung 19 bewirkt, dass das Fluid im Bereich der Auslass-Öffnung 18 eine Strömungsrichtungs-Komponente erhält, die zur Gehäuse-Kanalmitte respektive zur Symmetrieachse 21 weist. Das Fluid strömt entlang der Schrägfläche 20, im Bereich der Schrägfläche 20 idealerweise parallel zur Schrägfläche 20 und somit nicht zur Dichtung 14 sondern daran vorbei. Hierzu sitzt die Dichtung 14 in einer Ausnehmung 22, welche zur auslassseitigen Kante 23 der Schrägfläche 20 einen Abstand a aufweist. Der Querschnitt der Ausnehmung 22 entspricht im Wesentlichen dem Querschnitt der Dichtung 14, abgesehen von demjenigen Bereich der Ausnehmung 22, wo Ausnehmungsbegrenzung 24 und auslassseitige Begrenzung (23) der Verjüngung 19 ein Führungselement 25 für die Fluidströmung ausbilden. Durch diese durch einen Rücksprung der Dichtung 14 gegenüber dem Führungselement 25 respektive gegenüber der auslassseitigen Kante 23 des Strömungsbereichs 26 gekennzeichneten Gehäuse-Kanalgeometrie wird erreicht, dass die Dichtung 14 außerhalb des Strömungsbereichs 26 angeordnet ist, jedoch weiterhin so, dass in geschlossener Stellung (Fig. 1B) eine hinreichende Dichtwirkung erzielbar ist.

Die im Wesentlichen zylindersymmetrische respektive kegelsymmetrische Geometrie des Gehäuse-Kanals 3 ist insbesondere so gewählt, dass die Gehäuse-Kanalwand (9) innenseitig nahezu stufenlos und kantenlos gebildet ist. Der Gehäuse-Kanal 3 der Ventilvariante gemäß der Figuren 1 A/B und 2 kann einstückig gebildet sein.

Die Ursache für Fluid-Verunreinigungen, welche von Abrasionen der Armatur-Materialien entstehen könnten, wurde durch die Anordnung gemäß der Figuren 1A/B und 2 bereits beseitigt, da das Fluid beim Strömen aufgrund der Strömungsrichtung im Strömungsbereich 26 nicht mit dem abrasions-empfindlichen Material der Dichtung 14 in Kontakt treten kann. Eine weitere Ursache für Verunreinigungen kann das Fluid selbst sein, beispielsweise wenn durch die Armatur (1) zunächst ein erstes Fluid hindurchströmt und in einem späteren Prozessschritt ein zweites, sich von dem ersten Fluid hinsichtlich der Materialzusammensetzung und/oder hinsichtlich physikalischer und/oder chemischer Eigenschaften unterscheidendes zweites Fluid. Rückstände des ersten Fluids würden in diesem Beispiel eine Verunreinigung des zweiten Fluids bilden.

Um dies zu vermeiden, ist an dem Ventilkörper-Schaft 11 ein Abstreifelement 27 angeordnet, welches verhindert, dass Fluidkomponenten in die Ventilkörperführung 8 hineingelangen. Dieser Effekt des Fernhaltens von Fluidkomponenten innerhalb der Ventilkörperführung 8 wird dadurch unterstützt, dass das Volumen der Ventilkörperführung 8 mit einem beispielsweise gasförmigen Spülmedium beaufschlagt wird. Das Spülmedium gelangt über eine Zuleitung 28 und/oder eine Druckeinspeisung 29 in das Volumen der Ventilkörperführung 8 und hat dort einen Überdruck gegenüber der Ventilkörper-Umgebung. Fluidkomponenten, die in die Nähe der Ventilkörperführung 8 gelangen, werden mittels Spülmedium-Überdruck daran gehindert in das Volumen der Ventilkörperführung 8 einzudringen, wodurch Verunreinigungen im Bereich der Ventilköperführung 8 unterbleiben.

Unterstützt wird dieser Aspekt der Vermeidung von Verunreinigungen dadurch, dass beim Öffnen des Ventils 1 der Ventilkörper 5 in die gleiche Richtung bewegt wird, in die sich die Material- respektive Fluidsäule bei der Fluidströmung bewegt, Es kommt demnach nicht zu einer Verdichtung des Fluids im Gehäuse-Kanal 3 respektive im Strömungsbereich 26 des Gehäuse-Kanals 3 und somit auch nicht zu einer ungewollten Bewegung der Fluidkomponenten in Richtung Ventilkörperführung 8.

Der Ventilköper 5 gemäß der Darstellungen der Figuren 1A/B und 2 kann pneumatisch oder mechanisch bewegt werden. Es kann zweckmäßig sein, wenn in dem Ventil 1 zumindest eine Endlagenabfrage des Ventilkörpers 5 vorgesehen ist.

Sämtliche der hierin beschriebenen Maßnahmen zur Reduzierung/Vermeidung von Verunreinigungen sind so beschaffen, dass das Ventil 1 getaktet betrieben werden kann. Weder durch die Anordnung der Dichtung 6, 14 außerhalb der Fluid-(Strömungs-)Säule, noch durch das Führungselement 25 oder durch die Spül- und abstreifmaßnahmen (27, 28, 29) im Bereich Ventilkörper 5 respektive Ventilkörperführung 8 wird eine Taktzeitreduzierung des getaktet betriebenen Ventils 1 bewirkt. Das Ventil 1 kann aufgrund der Ventilkörpergeometrie bevorzugt mit sehr schneller Taktung (auf/zu/auf/zu/auf/zu/.../...) betrieben werden.

In den Ansichten gemäß der Figuren 1A/B und 2 ist zu sehen, dass die Fläche der Projektion der Ventilkörperführung 8 auf die Ebene der Fluidauslass-Öffnung 18 kleiner ist als die Fläche der Projektion des kegelförmigen Ventilkörpers 5 auf eben diese Ebene der Fluidauslass-Öffnung 18. Die Material- respektive Fluidsäule, die sich gemäß der Figuren 1A/B vertikal abwärts und gemäß der Fig. 2 in die Zeichenebene hinein bewegt, lastet mit ihrem Gewicht somit überwiegend auf der Schrägfläche 19 des Gehäuses 2 und auf der Ventilkörperführung 8 (und auf den Stegen 7). Hinsichtlich der wirkenden (Gewichts-)Kräfte werden somit die Kegelfläche 13 des Ventilköpers 5 und somit der gesamte Ventilkörper 5 entlastet. Dies ist insbesondere dann spürbar, wenn das Fluid aus einem Metallpulver (Beispiel: Edelstahlpulver) gebildet ist. Bei gängigen Ventilabmessungen kann das Gewicht der Fluidsäule (Edelstahlpulversäule) auf dem Kegel (5) im Bereich von einigen zehn Kilogramm (kg) liegen, beispielsweise 50 kg. Durch die Ventilgeometrie wird diese Last erheblich reduziert. Diese Entlastung trägt dazu bei dass das Ventil 1 mit besonders hoher respektive besonders schneller Taktung betrieben werden kann.

### BEZUGSZEICHENLISTE

- 1: Ventil
- 2: Ventilgehäuse
- 3: Gehäuse-Kanal
- 4: Flansch
- 5: Ventilkörper
- 6: Dichtungsanordnung
- 7: Steg
- 8: Ventilkörperführung
- 9: Gehäuse-Wand
- 10: Feder
- 11: Ventilkörper-Schaft
- 12: Endbereich
- 13: Kegelfläche
- 14: Dichtung, O-Ring
- 15: dichtende Fläche
- 16: Schrägfläche
- 17: Fluideinlass-Öffnung
- 18: Fluidauslass-Öffnung
- 19: Verjüngung
- 20: Schrägfläche
- 21: Symmetrieachse
- 22: Ausnehmung
- 23: Kante
- 24: Ausnehmungsbegrenzung
- 25: Führungselement
- 26: Strömungsbereich
- 27: Abstreifelement
- 28: Zuleitung
- 29: Druckeinspeisung
- a: Abstand

## Patentansprüche

1. Modularer Behälter für ein aus einem Metallpulver gebildetes Fluid,
wobei der Behälter ein Ventil (1) zum Dosieren eines vertikal oder nahezu vertikal verlaufenden Fluid-Flusses von einem ersten Behältermodul des modularen Behälters in ein zweites Behältermodul umfasst, wobei das Ventil (1) ein Ventilgehäuse (2) mit einer Fluideinlass-Öffnung (17) und einer Fluidauslass-Öffnung (18) umfasst, wobei
das Ventilgehäuse (2) einen Gehäuse-Kanal (3) umfasst, in oder an dem ein beweglicher Ventilkörper (5) angeordnet ist, sodass der Gehäuse-Kanal (3) in einer geöffneten Ventilkörperstellung für das Fluid durchlässig und in einer geschlossenen Ventilkörperstellung für das Fluid undurchlässig ist,
eine Dichtungsanordnung (6) vorgesehen ist, mit der der Gehäuse-Kanal (3) in geschlossener Ventilkörperstellung dicht verschlossen ist,
der Gehäuse-Kanal (3) einen Strömungsbereich (26) aufweist, durch den das Fluid bei geöffneter Ventilkörperstellung strömt,
die Dichtungsanordnung (6) außerhalb des Strömungsbereichs (26) angeordnet ist, und
wobei der modulare Behälter derart ausgebildet ist, dass die Ventilkörper-Bewegung bei einer Änderung der Ventilkörperstellung mit schneller Taktung erfolgt,
**dadurch gekennzeichnet,**
**dass** der Ventilkörper (5) in einer Ventilkörperführung (8) beweglich angeordnet ist, wobei die Ventilkörperführung oberhalb des Ventilkörpers (5) angeordnet ist, und wobei die Fläche der Projektion der Ventilkörperführung (8) auf die Ebene der Fluidauslass-Öffnung (18) kleiner ist als die Fläche der Projektion des Ventilkörpers (5) auf die Ebene der Fluidauslass-Öffnung (18), so dass das Gewicht der Fluidsäule im Wesentlichen auf dem Ventilgehäuse und der Ventilkörperführung lastet, wodurch der Ventilkörper entlastet wird,
**dass** im Gebrauch die Taktung der Ventilkörperstellung schneller ist als eine trägheitsbedingte und durch den Ventilkörper und/oder das Ventilgehäuse verursachte Richtungs- und/oder Geschwindigkeits-Änderung des Fluid-Flusses, und
**dass** der fluidauslass-seitige Strömungsbereichs-Querschnitt eine kleinere Fläche aufweist als der Querschnitt der Dichtungsanordnung (6), wobei der Strömungsbereich (26) zumindest eine Verjüngung (19) aufweist, wobei der kleinere Strömungsbereichs-Querschnitt der Verjüngung (19) im Bereich der Fluidauslass-Öffnung (18) angeordnet ist.

2. Behälter (1) nach Anspruch 1, **dadurch gekennzeichnet, dass** der Gehäuse-Kanal (3) zumindest ein Führungselement (25) umfasst, mit welchem das Fluid in geöffneter Ventilkörperstellung so durch den Gehäuse-Kanal (3) hindurchführbar ist, dass das Fluid an der Dichtungsanordnung (6) vorbeigeführt wird ohne mit der Dichtungsanordnung (6) in Kontakt zu treten.

3. Behälter (1) nach Anspruch 2, **dadurch gekennzeichnet, dass** Gehäuse-Kanal (3) und Führungselement (25) eine stufen- und/oder kantenlose, die Gehäuse-Kanalinnenfläche bildende Oberfläche bilden, so dass Anhaftungen des Fluids insbesondere im Bereich des Führungselementes (25) unterbleiben.

4. Behälter (1) nach Anspruch 2 oder 3, **dadurch gekennzeichnet, dass** eine Gehäuse-Kanalwand (9) und das Führungselement (25) einstückig gebildet sind.

5. Behälter (1) nach Anspruch 2 oder 3, **dadurch gekennzeichnet, dass** das Führungselement (25) in den Gehäuse-Kanal (3) einsetzbar, insbesondere nachträglich einsetzbar, ist.

6. Behälter (1) nach einem der Ansprüche 1 bis 5, **dadurch gekennzeichnet, dass** der Ventilkörper (5) in der Ventilkörperführung (8) beweglich angeordnet ist,
wobei die Ventilkörperführung (8) mit einem, insbesondere gasförmigen, Spülmedium beaufschlagbar ist, so dass innerhalb der Ventilkörperführung (8) ein Überdruck gegenüber der Ventilkörperumgebung herrscht.

7. Behälter (1) nach einem der Ansprüche 1 bis 6, **dadurch gekennzeichnet, dass** der Ventilkörper (5) pneumatisch und/oder elektrisch und/oder mechanisch, insbesondere manuell, und/oder mittels energie-wandelndem Mittel, und/oder mittels einer von außerhalb des Ventils (1) zugänglichen Aktorik bewegbar ist, wobei die Aktorik über eine Durchführung mit dem Ventilkörper (5) mechanisch verbunden ist, und wobei die Durchführung mit einem, insbesondere gasförmigen Spülmedium beaufschlagbar ist, so dass in der Durchführung ein Überdruck gegenüber der Umgebung der Aktorik und/oder der Durchführung herrscht.

8. Behälter (1) nach einem der Ansprüche 1 bis 7, **dadurch gekennzeichnet, dass** die Dichtungsanordnung (6) radialsymmetrisch gebildet ist, insbesondere umfassend zumindest einen O-Ring (14) oder aus zumindest einem O-Ring (14) gebildet.

9. Behälter (1) nach einem der Ansprüche 1 bis 8, **dadurch gekennzeichnet, dass** das Ventil (1) einen radialsymmetrischen Ventilkörper (5) umfasst und/oder einen radialsymmetrischen Gehäuse-Kanal (3), insbesondere einen kegelsymmetrischen Ventilkörper (5) und/oder einen kegelsymmetrischen Strömungsbereich (26) und/oder ein kegelsymmetrisches Führungselement (25).

10. Behälter (1) nach einem der Ansprüche 1 bis 9, **dadurch gekennzeichnet, dass** die Dichtungsanordnung (6) in einer im oder am Gehäuse-Kanal (3) angeordneten Ausnehmung (22) angeordnet ist, und dass eine Begrenzung (24) der Ausnehmung (22) zumindest abschnittsweise den Strömungsbereich (26) begrenzt.

11. Behälter (1) nach einem der Ansprüche 1 bis 10, **dadurch gekennzeichnet, dass** der Ventilkörper (5) einen Ventilkörper-Schaft (11) umfasst, an dem zumindest ein Abstreifelement (27) zum Abstreifen von Fluidresten während der Ventilkörperbewegung vorgesehen ist.

12. Dosierverfahren zum Dosieren einer Fluid-Strömung eines Fluids von einem ersten Behältermodul eines modularen Behälters nach einem der Ansprüche 1 bis 11 in ein zweites Behältermodul, **da durch gekennzeichnet**, dass eine schnelle Taktung von abwechselnd erster, insbesondere geschlossener, Ventilkörperstellung und zweiter, insbesondere geöffneter oder teilweise geöffneter, Ventilkörperstellung, wobei die Taktung eines einen Ventilkörper umfassenden Dosierventils des Behälters bis zu 20 Ventilkörperstellungs-Änderungen pro Sekunde umfasst.

## Claims

1. Modular container for a fluid made from a metal powder,
wherein the container comprises a valve (1) for metering a vertically or nearly vertically running fluid flow from a first container module of the modular container into a second container module, wherein the valve (1) comprises a valve housing (2) comprising a fluid inlet opening (17) and a fluid outlet opening (18), wherein
the valve housing (2) comprises a housing channel (3) in or on which a moveable valve body (5) is arranged so that the housing channel (3) is permeable to the fluid in an open valve-body position and impermeable to the fluid in the closed valve-body position,
a seal assembly (6) is provided by which the housing channel (3) is tightly sealed in the closed valve-body position, the housing channel (3) comprises a flow area (26) through which the fluid flows when the valve-body position is open,
the seal assembly (6) is arranged outside the flow section (26), and
wherein the modular container is designed in such a way that the valve-body movement occurs at a rapid pace when the valve-body position is changed,
**characterized in that**
the valve body (5) is arranged in a moveable manner in a valve-body guide (8), wherein the valve-body guide is arranged above the valve body (5), and wherein the area of the projection of the valve-body guide (8) to the plane of the fluid outlet opening (18) is smaller than the area of the projection of the valve body (5) to the plane of the fluid outlet opening (18) so that the weight of the fluid column is essentially on the valve housing and the valve-body guide, whereby this relieves the valve body,
that, in use, the rate of the valve-body position is faster than an inertial change in the direction and/or velocity of the fluid flow caused by the valve body and/or the valve housing, and
that the fluid outlet side of the cross-section of the flow section comprises a smaller area than the cross-section of the seal assembly (6), wherein the flow region (26) comprises at least one tapering (19), wherein the smaller cross-section of the flow section of the tapering (19) is located in the area of the fluid outlet opening (18).

2. The container (1) according to Claim 1, **characterized in that** the housing channel (3) comprises at least one guide element (25) by means of which the fluid can be passed through the housing channel (3) in the open valve-body position in such a way that the fluid is passed by the seal assembly (6) without coming into contact with the seal assembly (6).

3. The container (1) according to Claim 2, **characterized in that** the housing channel (3) and guide element (25) form a stepless and/or edgeless surface forming the housing-channel inner surface so that adhesion of the fluid, particularly in the area of the guide element (25), is avoided.

4. The container (1) according to Claim 2 or 3, **characterized in that** a housing channel wall (9) and the guide element (25) are formed as a single piece.

5. The container (1) according to Claim 2 or 3, **characterized in that** the guide element (25) can be inserted into the housing channel (3), in particular, being capable of being subsequently inserted.

6. The container (1) according to any one of the Claims 1 to 5, **characterized in that** the valve body (5) is arranged in a moveable manner in the valve-body guide (8),
wherein, in particular, a flushing medium, in particular, a gaseous one, can be applied to the valve-body guide (8) so that an overpressure prevails within the valve-body guide (8) with relation to the surrounding area of the valve body.

7. The container (1) according to any one of the Claims 1 to 6, **characterized in that** the valve body (5) can be moved pneumatically and/or electrically and/or mechanically, in particular, manually, and/or by means of an energy-converting means, and/or by means of an actuator accessible from outside the valve (1), wherein the actuator is mechanically connected to the valve body (5) by means of a feedthrough, and wherein a flushing medium, in particular, a gaseous one, can be applied to the feedthrough so that an overpressure prevails within the feedthrough with relation to the surrounding area of the actuator and/or the feedthrough.

8. The container (1) according to any one of the Claims 1 to 7, **characterized in that** the seal assembly (6) is radially symmetrical, in particular, comprising at least one O-ring (14) or is composed of at least one O-ring (14).

9. The container (1) according to any one of the Claims 1 to 8, **characterized in that** the valve (1) comprises a radially symmetrical valve body (5) and/or a radially symmetrical housing channel (3), in particular, a cone-symmetrical valve body (5) and/or a cone-symmetrical flow region (26) and/or a cone-symmetrical guide element (25).

10. The container (1) according to any one of the Claims 1 to 9, **characterized in that** the seal assembly (6) is arranged in a recess (22) arranged in or on the housing channel (3), and that a boundary (24) of the recess (22) limits the flow section (26) at least in sections.

11. The container (1) according to any one of the Claims 1 to 10, **characterized in that** the valve body (5) comprises a valve-body shaft (11) on which at least one wiper element (27) is provided for wiping off fluid residues during valve-body movement.

12. Metering method for metering a fluid flow of a fluid from a first container module of a modular container according to any one of the Claims 1 to 11 into a second container module, **characterized in that** a rapid rate of alternating a first, in particular, closed valve-body position and second, in particular open or partially open, valve-body position, wherein the rate of a metering valve of the container comprising a valve body comprises up to 20 valve-body-position changes per second.

## Revendications

1. Récipient modulaire pour un fluide formé d'une poudre métallique,
sachant que le récipient comprend une soupape (1) pour doser un flux de fluide passant verticalement ou à peu près verticalement d'un premier module de récipient du récipient modulaire dans un deuxième module de récipient, sachant que la soupape (1) comprend un boîtier de soupape (2) avec une ouverture d'entrée de fluide (17) et une ouverture de sortie de fluide (18), sachant que
le boîtier de soupape (2) comprend un conduit de boîtier (3) dans lequel ou sur lequel est disposé un corps de soupape (5) mobile de telle sorte que le conduit de boîtier (3) peut être traversé par le fluide dans une position de corps de soupape ouverte et ne peut pas être traversé par le fluide dans une position de corps de soupape fermée,
un système de joint d'étanchéité (6) est prévu avec lequel le conduit de boîtier (3) est fermé de façon étanche en position de corps de soupape fermée, le conduit de boîtier (3) comporte une zone d'écoulement (26) à travers laquelle le fluide s'écoule à une position de corps de soupape ouverte,
le système de joint d'étanchéité (6) est disposé en dehors de la zone d'écoulement (26), et
sachant que le récipient modulaire est constitué de telle manière que le mouvement de corps de soupape à lieu à un cadencement rapide lors d'une variation de la position de corps de soupape,
**caractérisé en ce que**
le corps de soupape (5) est disposé mobile dans un guidage de corps de soupape (8), sachant que le guidage de corps de soupape est disposé au-dessus du corps de soupape (5) et sachant que la surface de projection du guidage de corps de soupape (8) sur le plan de l'ouverture de sortie de fluide (18) est plus petite que la surface de projection du corps de soupape (5) sur le plan de l'ouverture de sortie de fluide (18) de telle manière que le poids de la colonne de fluide pèse pour l'essentiel sur le boîtier de soupape et le guidage de corps de soupape, le corps de soupape étant de ce fait soulagé,
**en ce qu'**en utilisation, le cadencement de la position de corps de soupape est plus rapide qu'une variation de direction et/ou de vitesse conditionnée par l'inertie et causée par le corps de soupape et/ou le boîtier de soupape, et
**en ce que** la section de la zone d'écoulement du côté sortie de fluide comporte une surface plus petite que la section du système de joint d'étanchéité (6), sachant que la zone d'écoulement (26) comporte au moins un rétrécissement (19), sachant que la section de la zone d'écoulement plus petite du rétrécissement (19) est disposée dans la zone de l'ouverture de sortie de fluide (18).

2. Récipient (1) selon la revendication 1, **caractérisé en ce que** le conduit de boîtier (3) comprend au moins un élément de guidage (25) avec lequel le fluide peut être passé à travers le conduit de boîtier (3) dans la position de corps de soupape ouverte de telle manière que le fluide est passé devant le système de joint d'étanchéité (6) sans entrer en contact avec le système de joint d'étanchéité (6).

3. Récipient (1) selon la revendication 2, **caractérisé en ce que** le conduit de boîtier (3) et l'élément de guidage (25) forment une surface sans gradin et/ou sans arête, formant la surface intérieure de conduit de boîtier de telle manière qu'il ne se produit pas d'adhérences du fluide en particulier dans la zone de l'élément de guidage (25).

4. Récipient (1) selon la revendication 2 ou 3, **caractérisé en ce qu'**une paroi de conduit de boîtier (9) et l'élément de guidage (25) sont formés en une seule pièce.

5. Récipient (1) selon la revendication 2 ou 3, **caractérisé en ce que** l'élément de guidage (25) peut être introduit dans le conduit de boîtier (3), en particulier introduit ultérieurement.

6. Récipient (1) selon l'une quelconque des revendications 1 à 5, **caractérisé en ce que** le corps de soupape (5) est disposé mobile dans le guidage de corps de soupape (8),
sachant que le guidage de corps de soupape (8) peut être sollicité par un milieu de rinçage en particulier gazeux de telle manière qu'une surpression règne à l'intérieur du guidage de corps de soupape (8) par rapport à l'environnement de corps de soupape.

7. Récipient (1) selon l'une quelconque des revendications 1 à 6, **caractérisé en ce que** le corps de soupape (5) peut être déplacé de façon pneumatique et/ou électrique et/ou mécanique, en particulier manuellement, et/ou au moyen de moyens convertisseurs d'énergie, et/ou au moyen d'un système d'actionneurs accessible depuis l'extérieur de la soupape (1), sachant que le système d'actionneurs est mécaniquement relié par un passage au corps de soupape (5) et sachant que le passage peut être sollicité par un milieu de rinçage en particulier gazeux de telle manière qu'une surpression règne dans le passage par rapport à l'environnement du système d'actionneurs et/ou du passage.

8. Récipient (1) selon l'une quelconque des revendications 1 à 7, **caractérisé en ce que** le système de joint d'étanchéité (6) est formé en symétrie radiale, en particulier comprenant au moins un joint torique (14) ou formé d'au moins un joint torique (14).

9. Récipient (1) l'une quelconque des revendications 1 à 8, **caractérisé en ce que** la soupape (1) comprend un corps de soupape (5) radialement symétrique et/ou un conduit de boîtier (3) radialement symétrique, en particulier un corps de soupape (5) en symétrie conique et/ou une zone d'écoulement (26) en symétrie conique et/ou un élément de guidage (25), en symétrie conique.

10. Récipient (1) selon l'une quelconque des revendications 1 à 9, **caractérisé en ce que** le système de joint d'étanchéité (6) est disposé dans un évidement (22) disposé dans ou sur le conduit de boîtier (3) et **en ce qu'**une limitation (24) de l'évidement (22) limite au moins par endroits la zone d'écoulement (26).

11. Récipient (1) selon l'une quelconque des revendications 1 à 10, **caractérisé en ce que** le corps de soupape (5) comprend une tige de corps de soupape (11) sur laquelle est prévu au moins un élément de raclage (27) pour racler des restes de fluide pendant le mouvement de corps de soupape.

12. Procédé de dosage pour doser un écoulement de fluide d'un fluide d'un premier module de récipient d'un récipient modulaire selon l'une quelconque des revendications 1 à 11 dans un deuxième module de récipient, **caractérisé en ce qu'**un cadencement rapide alterne entre la première position de corps de soupape, en particulier fermée et la deuxième position de corps de soupape en particulier ouverte ou en partie ouverte, sachant que le cadencement d'une soupape de dosage du récipient comprenant un corps de soupape comprend jusqu'à 20 variations de position de corps de soupape par seconde.
